# EUROPEAN PATENT APPLICATION

(11) **EP 4 730 458 A1**
(43) Date of publication of application: **22.04.2026**
(21) Application number: 25209630.0
(22) Date of filing: 18.10.2025
(51) Int. Cl.: H01M 10/04, H01M 10/48, H01M 10/6567, H01M 50/204, H01M 50/618

(54) **A BATTERY CONTROL SYSTEM**

(30) Priority: 20.10.2024 NL 1044979
(71) Applicant: Inventiatech, 2729 CG Zoetermeer (NL)
(72) Inventor: Rahimzadeh Khorasani, Mohammad Ali, 1673853513 Tehran (IR); Rahimzadeh Khorasani, Mohammad Mahdi, 2729 CG Zoetermeer (NL)

(57) **Abstract**

A **battery** control system comprises a sealed enclosure housing at least one electrochemical cell immersed in a dielectric liquid. Isostatic pressure is applied to the cell via the dielectric liquid by a pneumatic supply unit which injects a pressurised gas into the enclosure. A controller is configured to dynamically regulate the applied pressure in a closed-loop system based on the measured internal resistance of the cell, which serves as a direct indicator of the cell's state-of-health. Thermal management is provided by an internal heat exchanger that conditions the temperature of the contained dielectric liquid via an intermediate coolant circuit. A gas-liquid separation unit is fluidically coupled to a gas outlet to prevent liquid loss during pressure venting. The system extends the cycle life and enhances the safety and reliability of electrochemical cells.

## Description

### Technical Field

The present disclosure relates to the field of electrochemical energy storage systems, and more particularly to a battery control system configured for maintaining electrochemical cells under predetermined thermal and isostatic pressure conditions.

### Background Art

The performance and cycle life of electrochemical cells, particularly within battery modules, are critically dependent on managing both thermal and mechanical stresses. For thermal control, direct immersion cooling in a dielectric fluid is recognized as a state-of-the-art solution for achieving superior temperature uniformity and mitigating thermal runaway. Concurrently, it is understood that applying mechanical compression is necessary to counteract the inherent swelling of cells, a phenomenon that otherwise leads to internal degradation and a rapid increase in internal resistance and reduction in cycle life.

The industry is evolving from rudimentary fixed displacement clamps, which apply a constant preload and can cause uncontrolled over-pressurization as cells swell during the aging, towards more sophisticated dynamic pressure control systems. The goal of these dynamic systems is to adapt the applied pressure to the changing conditions of the battery throughout its life.

An example of such an approach is described in WO 2023/081993 A1. This document discloses a system that aims to dynamically manage both pressure and temperature by using a single heat transfer liquid. The liquid is circulated through the battery module and is actively pressurised using a complex hydraulic circuit comprising pumps, accumulators, and control valves. The control logic relies on external inputs such as energy demand, state of charge, and pre-programmed algorithms to adjust the hydraulic pressure and temperature of the fluid.

While such systems represent an advance over static clamping, they present their own technical challenges. The reliance on a high-pressure hydraulic liquid for compression results in a complex, heavy, and potentially leak-prone architecture. More fundamentally, their control strategies are based on indirect parameters and predictive models rather than the direct, real-time mechanical needs of the cells themselves. A significant gap remains in the art for a simpler, more reliable actuation method and a more intelligent control strategy that directly correlates the applied pressure to the actual physical state-of-health of the aging cells.

### Summary of Invention

The present disclosure provides a battery control system designed to maintain electrochemical cells under controlled thermal and isostatic pressure conditions. The system comprises an energy subsystem including a sealed enclosure containing a dielectric liquid and at least one gas injection unit, and a management subsystem including a controller unit, a pneumatic supply unit, and a thermal conditioning unit. These subsystems operate cooperatively, whereby the controller governs the pneumatic and thermal functions to regulate both pressure and temperature inside the enclosure.

In preferred embodiments, the sealed enclosure is formed as a double-walled structure with a variable-conductivity inter-wall space that can be selectively filled with the dielectric liquid to adapt its thermal insulation in response to operating conditions.

Through coordinated gas injection and venting, the pneumatic unit applies uniform compression to the electrochemical cells while maintaining a stable internal pressure, whereas the thermal conditioning unit, implemented as a reversible heat pump, regulates the dielectric liquid temperature to keep the cells within an optimal range via immersion cooling.

Furthermore, a feedback control loop based on the internal resistance of the electrochemical cells enables adaptive adjustment of the applied isostatic pressure in correlation with cell aging.

By integrating thermal, pressure, and health-state control in a single architecture, the system enhances battery performance, lifetime, and operational safety. additionally, a modular configuration allows scalable integration for various applications, including electric vehicles, aerospace systems, and stationary energy-storage units.

### Technical Problem

Conventional systems designed for the dynamic pressure and temperature control of electrochemical cells face significant challenges that limit their reliability, control precision, and overall efficiency.

A major drawback of existing dynamic systems is their typical reliance on complex hydraulic circuits to apply compressive force. This approach introduces significant architectural complexity and weight. Furthermore, it creates inherent risks of fluid leakage and contamination, as the primary dielectric liquid in which the cells are immersed must often be circulated externally to the sealed cell enclosure under high pressure.

Moreover, the control strategies employed in these systems generally rely on indirect operational parameters, such as state of charge or energy demand. This methodology lacks a direct feedback loop that is responsive to the actual physical state-of-health of the cells as they age and degrade. This results in a sub-optimal compression profile that fails to fully mitigate the increase in internal resistance and capacity fade over the cells' lifetime.

Additionally, these systems often exhibit limited functional integration, with components that are typically single-purpose. They also lack mechanisms to actively adapt their thermal insulation properties in response to changing ambient conditions, thereby compromising their energy efficiency.

Furthermore, the architectural design of current systems is often monolithic, lacking inherent modularity. This rigid structure makes it difficult to scale battery packs for various applications, often requiring complex and application-specific fluidic and electrical interconnections, thereby hindering straightforward assembly, servicing, and reconfiguration.

Therefore, a significant technical need exists for a system architecture that can provide robust dynamic pressure control without the reliability and complexity drawbacks of high-pressure hydraulic circuits, while implementing a control logic based on direct, real-time indicators of cell degradation.

### Solution to Problem

The present disclosure addresses the aforementioned problems by providing a battery control system, wherein the application of isostatic pressure is achieved through a pneumatic actuation system. A pressurised gas is introduced into a sealed enclosure containing the electrochemical cells and a dielectric liquid. This approach fundamentally overcomes the complexity, weight, and leakage risks associated with high-pressure hydraulic circuits, as the primary dielectric liquid remains entirely contained within the sealed enclosure at all times. The reliability of this pneumatic system is further enhanced by a dedicated gas-liquid separation unit configured to prevent the loss of dielectric fluid during gas venting operations.

According to another aspect of the disclosure, the system implements a more direct and effective control strategy. Instead of relying on indirect operational parameters, the control logic is based on a direct physical indicator of cell degradation. Specifically, the system is configured to monitor the internal resistance of the electrochemical cells and dynamically regulate the applied pneumatic pressure in a closed-loop feedback system. This allows the compressive force to be precisely adapted to the real-time state-of-health of the cells, thereby more effectively mitigating capacity fade and extending cycle life.

The system further provides a higher degree of functional integration and thermal adaptability. For instance, the gas injection unit is utilized for the dual purpose of pressure regulation and inducing forced convective circulation within the dielectric liquid to improve thermal homogeneity. Additionally, the sealed enclosure may be configured as a double-walled structure with variable thermal conductivity, allowing the system to actively alter its insulation properties in response to ambient conditions and operational demands.

Furthermore, the system architecture is designed for inherent modularity and scalability. It is comprised of distinct energy and management modules that can be interconnected to form battery packs of various sizes and specifications. This is facilitated by a modular interlocking system featuring integrated multi-domain connection interfaces, which are configured to establish mechanical, electrical, pneumatic, and fluidic connections simultaneously in a single, tool-less user action, thereby simplifying assembly, reconfiguration, and servicing.

### Advantageous Effects of Invention

The present disclosure provides a battery control system with several advantageous technical effects, resulting in significant improvements in operational lifetime, reliability, thermal efficiency, and architectural flexibility compared to conventional systems.

A principal advantage is the substantial extension of the electrochemical cells' operational lifetime. This is achieved through a direct control loop that dynamically adjusts isostatic pressure based on the cells' internal resistance. This method results in a more effective mitigation of capacity fade and a marked suppression of internal resistance growth throughout the cells' aging process, leading to measurably improved long-term performance and power delivery capability.

The system's architecture offers enhanced reliability and reduced complexity. By employing a pneumatic actuation mechanism, the need for complex, heavy, and leak-prone external hydraulic circuits is eliminated. The containment of the dielectric liquid entirely within a sealed enclosure, supported by an integrated gas-liquid separation unit for loss-free venting, inherently improves the robustness and serviceability of the system.

Furthermore, the system provides for greater safety and reliability. By utilizing an internal heat exchanger for thermal conditioning via an intermediate coolant, the primary dielectric liquid remains entirely sealed within the enclosure. This design eliminates the significant risks of contamination and leakage associated with circulating the specialized and often costly dielectric fluid outside the primary containment, a common requirement in many prior art systems. The use of a pneumatic medium for pressurization further enhances safety by removing the need for high-pressure hydraulic liquid lines.

The invention also provides for greater thermal and energy efficiency through synergistic component functionality. The dual use of the gas injection system for both pressure regulation and for inducing forced convective circulation improves thermal homogeneity without requiring additional components. Moreover, the ability to actively vary the thermal conductivity of the enclosure's double-walled structure allows the system to minimize energy consumption by adapting its insulation to different ambient conditions.

Finally, the modular architecture of the system yields a significant advantage in scalability and ease of integration. The design facilitates the straightforward assembly of multiple modules into larger battery packs. The inclusion of integrated multi-domain connection interfaces drastically simplifies the process of establishing all required mechanical, fluidic, and electrical connections, thereby reducing assembly time and improving adaptability for a wide range of applications.

### Brief Description of Drawings

The present invention is best understood by referencing the following description and the accompanying figures. These figures are given purely by way of indication and in no way restrict the scope of the application.
[Fig.1A] is a schematic view of a battery control system for isostatic pressure control, in accordance with one or more embodiments of the present disclosure.
[Fig.1B] is a schematic view of one or more embodiments of the battery control system, illustrating a different configuration for the gas injection unit and the dielectric liquid level.
[Fig.2] is a schematic view of one or more embodiments of the battery control system further configured for dynamic temperature control.
[Fig.3A] is a schematic view of one or more embodiments of the battery control system comprising a gas discharge mechanism.
[Fig.3B] is a schematic view illustrating one or more embodiments of the system incorporating various sensors for closed-loop feedback control.
[Fig.4A] is a detailed schematic view of one or more preferred embodiments of the battery control system, with a particular focus on the components of the management subsystem.
[Fig.4B] is a detailed schematic view illustrating one or more embodiments of the double-walled enclosure with variable thermal conductivity and its associated control system.
[Fig.5] is a detailed view of one or more exemplary embodiments of the gas-liquid separation unit.
[Fig.6] is a graph illustrating a variable pressure profile applied to electrochemical cells over their cycle life during experimental testing.
[Fig.7] is a graph of cell capacity versus cycle number for groups A, B, and C.
[Fig.8] is a graph of cell internal-resistance ratio to the initial internal resistance versus cycle number for groups A, B, and C.

### Description of Embodiments

In the following detailed description, numerous specific details are set forth to provide a thorough understanding of the relevant teachings. However, it should be apparent that the present teachings may be practiced without such specific details. In other instances, well-known methods, procedures, components, and circuitry have been described in a manner that will be readily understood by those skilled in the art, to avoid unnecessarily obscuring aspects of the present teachings.

This detailed description is intended to enable a person skilled in the art to make and use the methods and devices disclosed in exemplary embodiments of the present disclosure. For explanatory purposes, specific nomenclatures are used to provide a thorough understanding of the present disclosure. However, it will be apparent to those skilled in the art that these specific details are not required to practice the disclosed exemplary embodiments. Descriptions of specific exemplary embodiments are provided as representative examples. Various modifications to the exemplary embodiments will be readily apparent to those skilled in the art, and the general principles defined herein may be applied to other embodiments and applications without departing from the scope of the present disclosure. The present disclosure is not intended to be limited to the embodiments shown but is to be accorded the widest scope consistent with the principles and features disclosed herein.

In describing and claiming the present disclosure, the following terminology will be used in accordance with the definitions set forth below. Unless otherwise defined, all technical and scientific terms used herein have the same meaning as commonly understood by one of ordinary skill in the art to which this disclosure pertains. In the event of a conflict, the present document, including definitions, will control. As used herein, the singular forms "a," "an," and "the" include plural references unless the context clearly dictates otherwise. However, other embodiments may also be preferred under the same or other circumstances. Furthermore, the recitation of one or more preferred embodiments does not imply that other embodiments are not useful and is not intended to exclude other embodiments from the scope of the present disclosure.

As used herein, the terms "comprising," "including," "having," "containing," "involving," "incorporating," and similar terms are to be understood as open-ended, meaning they include but are not limited to the listed elements. Thus, before describing the present invention in detail, it is understood that the invention is not limited to the specific embodiments or process parameters exemplified, which may, of course, vary. It is also understood that the terminology used herein is to describe embodiments of the invention only and is not intended to limit the scope of the invention in any way. The use of examples anywhere in this specification, including examples of any terms discussed herein, is illustrative only and in no way limits the scope and meaning of the invention or of any exemplified term. Likewise, the invention is not limited to the various embodiments given in this specification.

As used throughout this specification, the term 'cell' is used interchangeably with 'electrochemical cell' 130, unless the context clearly indicates otherwise.

The present disclosure relates to a battery control system, and more particularly to a system for maintaining electrochemical cells under predetermined operating conditions. The system comprises components arranged to provide temperature and pressure control over the electrochemical cells, thereby enhancing operational safety, extending cycle life, and improving the overall performance and efficiency of the battery.

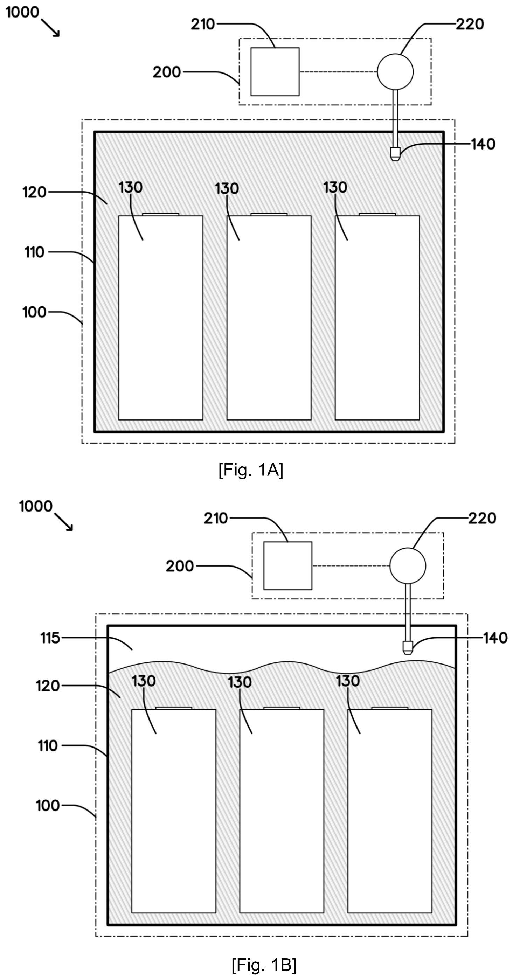

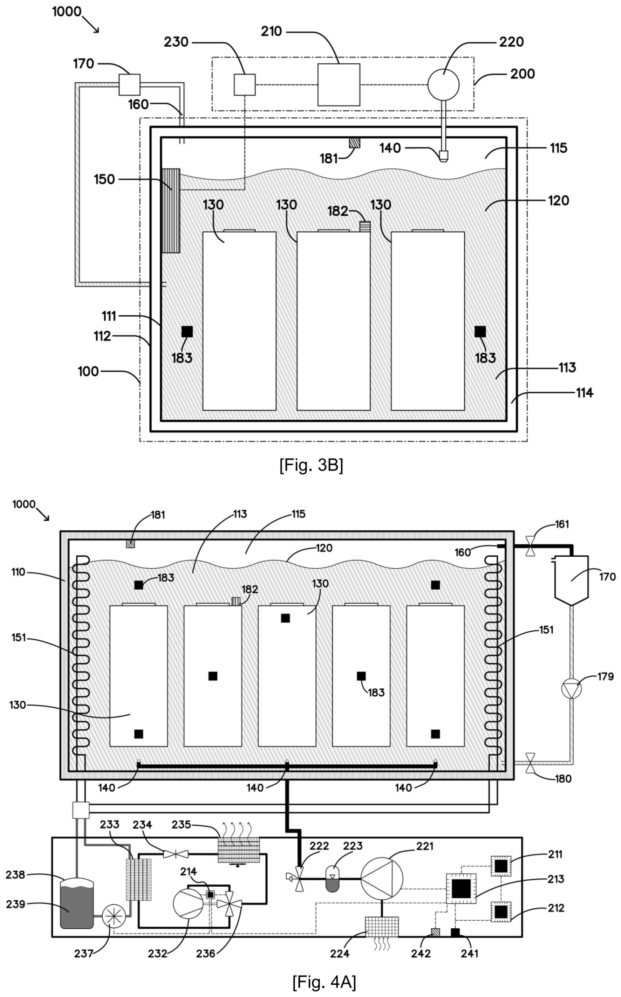

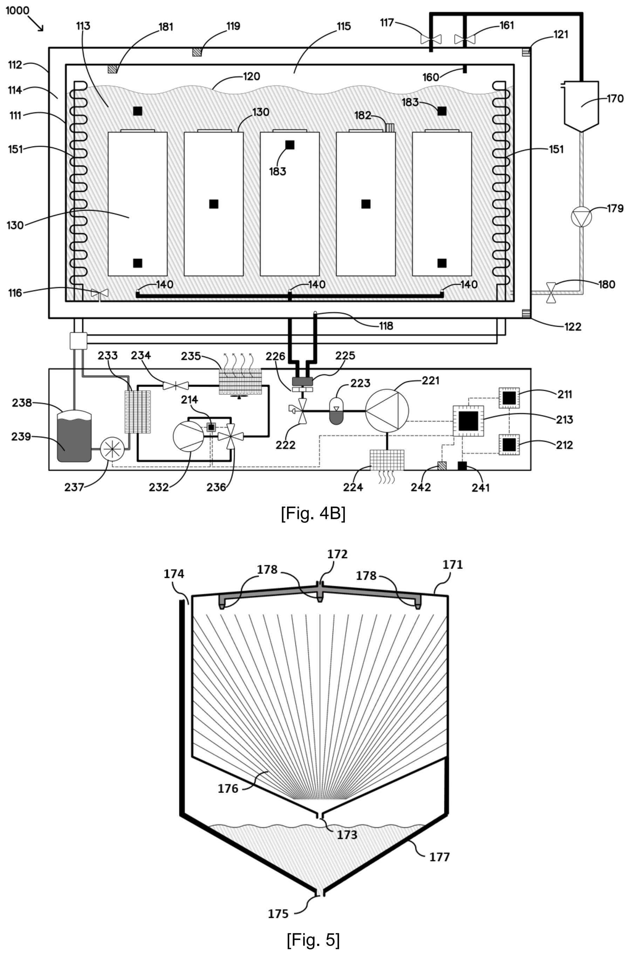

According to one or more embodiments of the present disclosure, FIG. 1A, FIG. 1B, FIG. 2, FIG. 3A and FIG. 3B illustrate general embodiments of the battery control system and its principal components. FIG. 4A, FIG. 4B and FIG. 5 depict more detailed embodiments that incorporate additional features, components and structural arrangements to further refine control of the battery operating conditions and to enhance system adaptability for various applications.

Referring now to one embodiment illustrated in FIG. 1A, a battery control system 1000 is shown which is designed for controlling the isostatic pressure applied to a plurality of electrochemical cells 130. The system 1000 comprises at least one energy subsystem 100 and at least one management subsystem 200, which cooperate to regulate the internal pressure and maintain uniform compression on the electrochemical cells 130. The system 1000 is designed to pneumatically regulate the isostatic pressure applied to the electrochemical cells. The controlled application of compression may be configured to maintain intimate contact between the internal layers of the cells, thereby suppressing delamination or swelling during operation. This configuration can extend the cycle life, increase the usable capacity, and mitigate irreversible mechanical degradation of the cells.

In one embodiment of the present disclosure, the energy subsystem 100 comprises a sealed enclosure 110, a dielectric liquid 120 contained therein, at least one electrochemical cell 130 positioned within the dielectric liquid 120, and at least one gas injection unit 140 arranged in fluid communication with the sealed enclosure 110 for supplying and distributing pressurised gas within the system.

In this embodiment, the management subsystem 200 comprises a controller unit 210 and a pneumatic supply unit 220. The controller unit 210 is operatively coupled to the pneumatic supply unit 220 to provide control commands and regulate its operation. The pneumatic supply unit 220, in turn, is connected to the gas injection unit 140 of the energy subsystem 100, thereby supplying gas into the sealed enclosure 110. Through this configuration, the controller unit 210 governs the gas flow and pressure within the sealed enclosure 110, enabling regulation of the isostatic pressure applied to the electrochemical cells 130.

In a preferred embodiment, the sealed enclosure 110 is configured as a rectangular cuboid, wherein its dimensions are selected according to the number of electrochemical cells 130 to be housed therein. The enclosure 110 may be fabricated from various materials, including metals, polymers, or composites, selected to provide sufficient structural integrity to contain the internal pressure. In a preferred embodiment, the enclosure 110 is designed to withstand a pressure of at least 5 bar and enclosure 110 is hermetically sealed to prevent any leakage of fluids or pressure.

In one embodiment, the pneumatic supply unit 220 comprises at least one pneumatic pump configured to compress ambient gas or to draw gas from a dedicated storage source, thereby generating and supplying pressurised gas to the sealed enclosure 110. The pneumatic pump is operatively coupled to the controller unit 210 to receive and execute control commands. The pneumatic supply unit 220 may further include at least one regulator configured to receive the pressurised gas from the pump and to adjust its pressure for the gas injection unit 140. The regulator may be a discrete unit or may be integrated with the pump. In a preferred embodiment, it is a digital regulator in electronic communication with the controller unit 210. Further details of the pneumatic supply unit 220 will be described with reference to an exemplary embodiment in FIG. 4B.

In one embodiment, the dielectric liquid 120 contained within the enclosure facilitates direct immersion cooling of the electrochemical cells 130. This immersion cooling can be either single-phase or two-phase. The dielectric liquid 120 is preferably selected to exhibit at least one of the following characteristics: being a Newtonian and substantially incompressible fluid; having a low electrical conductivity, for example, characterized by a dielectric strength of over 60 kV and an electrical resistivity of over 10^14 ohm-cm; possessing a viscosity suitable for effective convective heat transfer; having a wide operational temperature range, for instance, with freezing and boiling points between approximately -40°C and +200°C; being chemically inert with respect to battery components and system materials; being electrochemically stable across various operating voltages; having an environmentally benign composition; and being fire-retardant. The fire-retardant property is particularly advantageous for mitigating the propagation of thermal runaway events, thereby preventing explosions and fires. Furthermore, the dielectric liquid 120 may be a two-phase immiscible mixture, or it may incorporate various additives to enhance its properties, such as additional fire retardants, antioxidants, or heat transfer enhancers.

Within the enclosure 110, the electrochemical cells 130 are secured by fixturing elements, such as seats and supports. The specific arrangement of the cells is a critical design parameter that directly influences factors such as heat transfer efficiency, fluid circulation paths, the effectiveness of isostatic pressure application, and the overall volume of the enclosure. Accordingly, the cells 130 may be arranged to maximise their surface area in contact with the dielectric liquid 120, a configuration which enhances both the uniformity of the applied pressure and the rate of thermal exchange.

The spacing between adjacent cells 130 is also a key consideration. While a compact arrangement is desirable to minimise the final volume of the enclosure, a predetermined spacing may be implemented to ensure a sufficient volume of dielectric liquid exists between the cells. This interstitial fluid volume provides the necessary thermal capacity to effectively absorb or dissipate heat generated by the cells during operation.

In a preferred embodiment, the cells 130 are oriented to stand on their bottom edge, thereby exposing their larger faces to the dielectric liquid 120. Furthermore, for applications involving high-vibration environments, the cells may be further secured and isolated to damp mechanical shocks. In an implementation, elastomeric damping materials, such as silicone, are used as fillers in the spaces between adjacent cells and between the cells and the enclosure walls. For example, a damping element may be placed at the top and bottom of a prismatic cell to mitigate vibrational stresses.

FIG. 1B illustrates another embodiment of the present disclosure, in which both the filling level of the dielectric liquid 120 and the position of the gas injection unit 140 relative to the dielectric liquid 120 differ from those shown in FIG. 1A. In the arrangement of FIG. 1A, the sealed enclosure 110 is substantially filled with the dielectric liquid 120, and the gas injection unit 140 is positioned to be in direct fluidic communication with the dielectric liquid 120. In contrast, in the embodiment of FIG. 1B, the dielectric liquid 120 occupies only a portion of the sealed enclosure 110, thereby forming a gaseous headspace 115 above the liquid. In this configuration, the gas injection unit 140 is positioned within the gaseous headspace 115 and is therefore not in direct fluidic communication with the dielectric liquid 120.

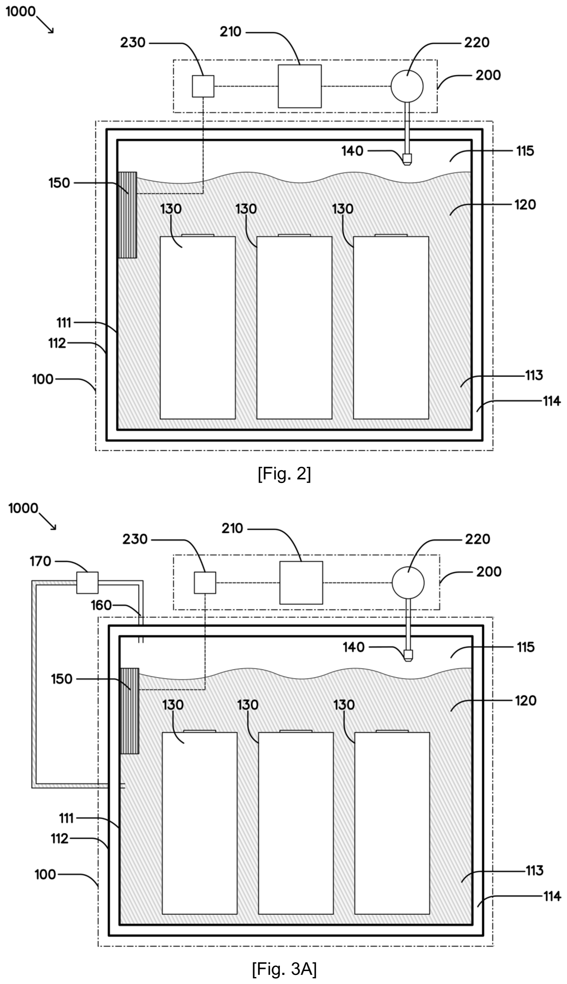

FIG. 2 illustrates an embodiment of the battery control system 1000, which is additionally configured for dynamic temperature control. Maintaining the electrochemical cells 130 within an appropriate temperature range is essential for reliable operation and long service life. Operation in cold ambient conditions may cause a considerable reduction in power output and can result in irreversible cell damage. Additionally, excessive heat generated during charge and discharge cycles or absorbed from hot surroundings accelerates degradation, reduces cycle life, and may pose safety risks. Effective thermal management, incorporating both heating and cooling functions, is therefore a key factor in ensuring optimal system performance and stability.

In an embodiment as shown in FIG. 2, the energy subsystem 100 includes at least one thermal transfer unit 150, while the management subsystem 200 further includes a thermal conditioning unit 230. The thermal conditioning unit 230 is operatively coupled to the thermal transfer unit 150, and together these components regulate the temperature of the electrochemical cells 130 through the dielectric liquid 120, which serves as the principal medium for thermal exchange. By controlling the temperature of the dielectric liquid 120, the temperature of the electrochemical cells 130 can be maintained within the desired range. In a preferred embodiment, the thermal transfer unit 150 is positioned inside the sealed enclosure 110 to enhance heat exchange efficiency. Positioning the thermal transfer unit 150 inside the enclosure contains the dielectric liquid 120 entirely within the sealed enclosure 110, thereby avoiding the system complexity and potential contamination associated with circulating the dielectric liquid externally.

In an exemplary embodiment, the sealed enclosure 110 is designed as a double-walled structure to enhance temperature control by providing thermal insulation. As illustrated in FIG. 2, in this embodiment, the sealed enclosure 110 comprises an inner wall 111 and an outer wall 112, which together define two separate spaces. The inner wall 111 forms a first space 113 that constitutes the interior space of the enclosure that contains the dielectric liquid 120 and the electrochemical cells 130. The outer wall 112 surrounds the inner wall 111 and defines a second space 114 between the two walls. In a preferred embodiment, the distance between the inner wall 111 and the outer wall 112 is approximately 20 mm, and each wall is designed to withstand an internal pressure of at least 5 bar. To achieve thermal insulation, the second space 114 may be evacuated to create a vacuum or may be filled with a gas, a Phase-Change Material (PCM), or another thermal insulating material.

The materials of the inner wall 111 and the outer wall 112 may be the same or different. In a preferred embodiment, the inner wall 111 is constructed from stainless steel with a thickness in the range of 1 to 2 mm, while the outer wall 112 is constructed from acrylonitrile butadiene styrene (ABS) with a thickness in the range of 2 to 4 mm. The selection of stainless steel for the inner wall 111 provides the requisite mechanical strength and ensures chemical compatibility with the fluids and operating conditions within the first space 113.

To enable dynamic pressure regulation, including the controlled reduction of internal pressure, the sealed enclosure 110 may be provided with a gas discharge mechanism. In one embodiment, this mechanism comprises at least one outlet formed in the sealed enclosure 110 for releasing gas. To prevent the loss of dielectric liquid 120 that may be carried along with the discharged gas, the outlet may be fluidically coupled to at least one separation structure designed to separate the entrained liquid from the vented gas and to return the recovered dielectric liquid 120 into the sealed enclosure 110. FIG. 3A illustrates a preferred embodiment of this gas discharge mechanism. In this arrangement, the sealed enclosure 110 includes a gas outlet 160 positioned in the gaseous headspace 115. The gas outlet 160 is fluidically coupled to a gas-liquid separation unit 170, which returns any discharged dielectric liquid 120 back into the sealed enclosure 110. The separation structure may be implemented using various conventional gas-liquid separator technologies, including but not limited to, demister pads, cyclone separators, centrifugal rotor separators, sintered filters, baffle plates, knockout drums, or vane-pack (chevron) mist eliminators.

For the purpose of real-time pressure and temperature regulation, an embodiment of the present disclosure may comprise at least one sensor for measuring parameters within the sealed enclosure 110, such as pressure and temperature. The system may further comprise at least one sensor configured to measure at least one internal electrical or mechanical characteristic of the at least one electrochemical cell 130. These sensors are in electronic communication with the controller unit 210, providing it with data to create a closed-loop feedback system. This feedback loop enables the controller unit 210 to dynamically adjust the system's actuators, such as the pneumatic supply unit and the thermal conditioning unit in response to the actual measured conditions, thereby maintaining the cells within their predetermined operational parameters. This electronic communication may be established through insulated physical electrical connections or via wireless protocols.

FIG. 3B illustrates an exemplary implementation of employing various types of sensors and their placements. In this arrangement, a pressure sensor 181 is positioned within the gaseous headspace 115. A cell monitoring sensor 182 is shown mounted on one of the electrochemical cells 130. Additionally, two temperature sensors 183 are disposed within the dielectric liquid 120. In this exemplary embodiment, all of these sensors communicate with the controller unit 210.

The cell monitoring sensor 182 may be configured to measure at least one parameter of the electrochemical cell 130, including but not limited to electrical characteristics such as impedance, internal resistance, instantaneous voltage, and current, and mechanical characteristics such as strain, stress, and cell thickness.

In a preferred embodiment, temperature sensors may be placed in thermal contact with each of the electrochemical cells 130 and their respective tabs to provide data for the direct monitoring of individual cell temperatures. In addition, other temperature sensors may be spatially distributed at various locations within the enclosure to provide the controller unit with information regarding temperature differentials and the formation of thermal gradients within the dielectric liquid 120.

For enhanced accuracy and reliability in pressure monitoring, the system may employ two or more pressure sensors positioned at different locations within the enclosure. This configuration allows for higher measurement accuracy, for instance, through the comparison or averaging of sensor data. Moreover, this arrangement provides redundancy, ensuring that in the event of one sensor's failure, a backup sensor remains operational for continued and safe pressure monitoring.

FIG. 4A provides a more detailed illustration of a preferred embodiment, with a particular focus on the components of the management subsystem 200. As previously introduced, this subsystem may comprise the pneumatic supply unit 220, the thermal conditioning unit 230, and the controller unit 210. The structure and function of these units will now be described in greater detail.

As shown in the exemplary embodiment of FIG. 4A, the pneumatic supply unit 220 comprises at least the previously mentioned pump 221 and regulator 222, and in this preferred embodiment, further comprises an accumulator 223. In this configuration, the output of the pump 221 is first routed to the accumulator 223, which serves to temporarily store and smooth the flow of pressurised gas before it is directed through the regulator 222 to the gas injection unit 140. This intermediate accumulator 223 functions as a pneumatic capacitor, absorbing instantaneous fluctuations and enhancing the system's ability to supply transient flow rates. Consequently, this arrangement reduces the cycling frequency of the pump 221 and improves the overall pressure stability of the system.

The pneumatic pump 221 may operate by compressing ambient gas or by drawing gas from a dedicated storage source. When a dedicated storage source is utilized, the connection should include safety mechanisms such as a primary regulator and an emergency shut-off valve to prevent over-pressurization of the system.

In an embodiment of the present disclosure as shown in FIG. 4A, pump 221 draws ambient air and at least one inlet filter 224 is positioned upstream of the pump to ensure the quality of the supplied gas. The inlet filter 224 may remove particulates, moisture and vapor-phase contaminants and may be implemented as a multi-stage assembly comprising a particle pre-filter for coarse dust, a moisture trap or desiccant dryer for water vapor, and a membrane filter for oil aerosols and other vapor-phase contaminants. In a preferred embodiment, inlet filter 224 elements are modular and replaceable to facilitate periodic servicing.

The pneumatic supply unit 220 further comprises a network of pneumatic lines, such as hoses, pipes, and couplings, for conveying the pressurised gas from the pneumatic pump 221 and accumulator 223 to various sections of the energy subsystem 100. These lines are selected to have sufficient mechanical strength to withstand the designated operating pressures and to be resistant to moisture, corrosion, and gas permeation. In a preferred embodiment, quick-release couplings are utilized at the interface points between the management subsystem 200 and the energy subsystem 100 to facilitate simple and leak-free assembly and disassembly.

Thermal management for the electrochemical cells 130 is provided by the cooperation of the thermal transfer unit 150 in the energy subsystem 100 and the thermal conditioning unit 230 in the management subsystem 200. In an embodiment as shown in FIG. 4A, the thermal transfer unit 150 is implemented as one or more heat exchangers 151 and the thermal conditioning unit 230 is implemented as a reversible vapor-compression heat pump. The reversible heat pump performs both heating and cooling, enabling active control of cell temperature across a wide range of ambient conditions by regulating the temperature of the dielectric liquid 120, which serves as the primary heat-transfer medium. In one embodiment, the system is configured to maintain the cell temperature within an ideal operating range, for example, between approximately 25°C and 35°C.

As further detailed in the preferred embodiment of FIG. 4A, the heat pump 231 may comprise at least one compressor 232 for compressing a refrigerant; at least one refrigerant-to-coolant heat exchanger coil 233 for transferring heat between the refrigerant and a liquid coolant 239 such as water or ethylene glycol; at least one expansion valve 234 for reducing the refrigerant pressure; and at least one refrigerant-to-air heat exchanger coil 235 for transferring heat between the refrigerant and the ambient environment. These components are sequentially connected in a closed circuit to complete a refrigeration cycle. This arrangement further includes a coolant pump 237 to circulate the heated or cooled liquid coolant 239 through a circuit connecting the refrigerant-to-coolant coil 233 and the heat exchanger 151. A coolant reservoir 238 is also provided to accommodate the required volume of coolant and its thermal expansion. To switch between heating and cooling modes, the heat pump circuit also includes a reversing valve 236 for altering the flow path of the refrigerant. Depending on the operating mode (cooling or heating), the refrigerant-to-coolant coil (233) and the refrigerant-to-air coil (235) operate as the evaporator and the condenser, respectively, with their roles reversed when the reversing valve (236) switches the cycle.

During a cooling operation, the refrigerant absorbs heat from the liquid coolant 239 in the refrigerant-to-coolant coil 233 and rejects this heat to the ambient air via the refrigerant-to-air coil 235. The chilled coolant is then circulated by the coolant pump 237 to the heat exchanger 151 within the energy subsystem 100. Inside the heat exchanger 151, the coolant indirectly reduces the temperature of the dielectric liquid 120, and consequently, the electrochemical cells 130.

During a heating operation, the flow path of the refrigerant is altered by the reversing valve 236. In this mode, the refrigerant absorbs heat from the ambient environment via the refrigerant-to-air coil 235 and transfers this heat to the liquid coolant 239 via the refrigerant-to-coolant coil 233. The heated coolant is then circulated to the heat exchanger 151, where it transfers heat to the dielectric liquid 120, thereby raising the temperature of the electrochemical cells 130 to their optimal operating range.

Using liquid coolant 239 as an intermediate heat-transfer medium together with the internal heat exchanger 151 prevents direct contact between the refrigerant and the electrochemical cells 130. This indirect thermal path offers several technical advantages. First, the dielectric liquid 120 remains entirely contained within the sealed enclosure 110, which significantly reduces the risk of leakage and contamination and preserves the fluid's quality. Second, the refrigerant is isolated from the battery enclosure, simplifying connection requirements and reducing the risk of refrigerant leakage or the need for recharging. Third, the use of common coolants like water or ethylene glycol, which have a high specific heat capacity and are low-cost, allows for efficient heat transfer at a reduced system cost. This indirect approach also enables a modular implementation of the system, as will be described in a later section.

A preferred placement for the heat exchanger 151 within the sealed enclosure 110 is illustrated in the embodiment of FIG. 4A. In this configuration, the heat exchanger 151 is arranged along at least two opposing vertical walls of the enclosure, extending from the floor to the ceiling of the sealed enclosure 110. This specific placement is designed to promote natural convection within the dielectric liquid 120, thereby inducing automatic fluid circulation and enhancing temperature uniformity throughout the enclosure. During a cooling operation, the dielectric liquid adjacent to the heat exchanger becomes cooler and denser, causing it to sink and establish a natural circulation loop. During a heating operation, the liquid adjacent to the heat exchanger becomes warmer and less dense, causing it to rise and establish a circulation loop in the reverse direction.

Depending on the specific arrangement of the electrochemical cells 130 within the sealed enclosure 110, localized heat accumulation may occur, leading to the formation of thermal gradients. Temperature non-uniformity can prevent the cells from being maintained at a consistent target temperature, causing some cells to operate at higher temperatures than others. This condition can result in reduced efficiency and irreversible damage over the long term. Therefore, to ensure temperature homogeneity and mitigate thermal gradients, it is advantageous to circulate the dielectric liquid 120 within the enclosure via a predetermined mechanism. This circulation facilitates mass transfer of the fluid, preventing localized heat build-up and ensuring all electrochemical cells 130 are maintained at a substantially uniform temperature.

While the previously described placement of the heat exchanger 151 significantly promotes natural convective circulation, a dedicated mechanism for active circulation may be included to further enhance and accelerate temperature homogenization. This is particularly useful in situations where the heat pump is not active. In one embodiment, a dedicated circulation pump may be used to actively circulate the dielectric liquid 120. In another embodiment, illustrated in FIG. 4A, the gas injection unit 140 is utilized to induce forced circulation. In this configuration, the gas injection unit 140 is arranged to be in direct fluidic communication with the dielectric liquid 120; for instance, it may be positioned in a lower portion of the sealed enclosure 110 to inject pressurised gas, thereby generating small bubbles. The movement of these bubbles creates a forced circulation within the liquid, which homogenizes the temperature, eliminates hot spots, and increases the surface heat transfer coefficient from the electrochemical cells 130. This arrangement provides the gas injection unit 140 with a dual function, as it is used for both isostatic pressure control and for inducing fluid circulation.

The injection of gas to induce circulation would, in isolation, cause the pressure within the sealed enclosure 110 to rise above its predetermined control range. To counteract this effect, gas is vented from the gas outlet 160 at a flow rate substantially equal to the injection flow rate. This coordinated control of gas inlet and outlet allows for continuous fluid circulation while maintaining the internal pressure at a near-constant, desired level, enabling the system to perform circulation as needed for thermal management.

In one embodiment, the internal arrangement of the electrochemical cells 130 is designed to facilitate effective fluid circulation, ensuring that no stagnant or dead zones exist within the dielectric liquid 120. This includes providing pathways for fluid to circulate vertically along the height of the cells. In a preferred embodiment for large prismatic or pouch cells, a spacing in the range of 5 mm to 20 mm is maintained between adjacent cells. This specific spacing optimizes the overall system volume while ensuring sufficient heat transfer to maintain cell temperatures below a specified threshold, for example, 35°C, which demonstrates the high efficiency of the design.

As previously described, the sealed enclosure 110 may be configured as a double-walled structure. In a further embodiment, the thermal conductivity of this double-walled structure can be altered to meet the thermal requirements of the system by changing the medium contained within the second space 114. To enable the variation in thermal conductivity, the second space 114 is configured to be selectively filled with or emptied of the dielectric liquid 120. FIG. 4B illustrates an exemplary embodiment of the sealed enclosure 110 formed as a double-walled structure with variable thermal conductivity. As shown, a first valve 116 is disposed on the inner wall 111, creating a fluid path between the first space 113 and the second space 114. A second valve 117 is disposed on the outer wall 112. To fill the second space 114, both valves are opened, allowing the dielectric liquid 120 to enter from the first space while the gas within the second space is displaced and vented to the ambient environment.

In a preferred arrangement, also depicted in FIG. 4B, the first valve 116 is positioned in the bottom of the inner wall 111 to facilitate efficient filling. Correspondingly, the second valve 117 is positioned in the top of the outer wall 112. The outlet of the second valve 117 may be configured in various ways. In one embodiment, it may be coupled to the gas-liquid separation unit 170 to recover any entrained dielectric liquid 120 that may be discharged during the filling process. In another embodiment, the second valve 117 is directly connected to the ambient environment.

In one embodiment, the transfer of the dielectric liquid 120 between the first space 113 and the second space 114 is controlled by managing the pressure differential between them. In the embodiment shown in FIG. 4B, a gas inlet port 118 is disposed within the second space 114 to increase its pressure by introducing gas. To monitor the pressure within this space, an inter-wall pressure sensor 119 is also included.

The pressure within the first space 113 is denoted as Pe, and the pressure within the second space 114 is denoted as Pw. To fill the second space 114, a condition where Pe > Pw is established by the controller unit 210. When the first valve 116 and second valve 117 are opened under this condition, the higher pressure in the first space drives the dielectric liquid 120 into the second space. Conversely, to empty the second space 114, a condition where Pw > Pe is established. This pressure differential forces the liquid from the second space back into the first space 113. The values of Pe and Pw are provided by the respective pressure sensors located in each space. Additionally, to verify the fill and empty states of the second space 114, at least one upper liquid detection sensor 121 and one lower liquid detection sensor 122 may be positioned therein. During a filling operation, when the upper sensor 121 detects the presence of the liquid, it transmits a signal to the controller unit 210, which then issues a command to stop the filling process. Similarly, during an emptying operation, the absence of liquid detected by the lower sensor 122 is used to signal the completion of the process.

In one embodiment, the gas inlet port 118 is connected to the pneumatic supply unit 220. In a preferred embodiment, as illustrated in FIG. 4B, the pneumatic supply unit 220 is configured to supply pressurised gas to both the gas injection unit 140 and the gas inlet port 118. In this embodiment the output from pump 221 and accumulator 223 is directed to regulator 222, and the regulator 222 output feeds into a distribution manifold 226. The distribution manifold 226 directs the gas flow to different paths. The selection of each path is controlled by at least one controllable element 225, which is preferably an electric valve controlled by controller unit 210.

In an embodiment depicted in FIG. 4B, a first path from distribution manifold 226 is connected via pneumatic lines to gas injection unit 140 and can be used for regulating the pressure within the first space 113, for inducing circulation in the dielectric liquid 120, or for both functions. A second path from distribution manifold 226 is connected via pneumatic lines to gas inlet port 118 to control the pressure within the second space 114, thereby enabling filling and emptying of that space with dielectric liquid 120.

The controllable element 225 may be configured as a single-channel valve, having one inlet and one outlet, or as a multi-channel valve with one inlet and multiple selectable outlets. In a preferred embodiment, a discrete switching valve is provided for each path to ensure independent control.

Utilizing electric valves as the controllable elements 225 allows regulator 222, configured as a digital regulator, to maintain a single output pressure while path selection is managed by said valves. This arrangement enables the system to perform multiple functions using a common set of hardware, including compressing the electrochemical cells 130, altering the thermal conductivity of the double-walled enclosure, and inducing thermal circulation of the dielectric liquid 120.

The controllable elements 225 are designed to provide a hermetic seal when closed to prevent gas leakage. Furthermore, in one embodiment one-way check valves may be installed in sensitive paths within the pneumatic network. The inclusion of check valves prevents backflow of pressure from one path to another, ensuring the integrity and independence of each pneumatic circuit.

FIG. 5 illustrates a detailed exemplary embodiment of the gas-liquid separation unit 170. In this embodiment, the unit comprises a housing 171 that includes an upper cylindrical section and a lower section shaped as an inverted cone with its apex pointing downwards. An initial liquid outlet 173 is located at this apex. Positioned below this conical section is a collection sump 177, which may also be configured as an inverted cone. A gas-liquid mixture inlet 172 is provided in the upper cylindrical section of the housing, which connects to an inlet distribution nozzle 178 for dispersing the incoming fluid mixture. A liquid return outlet 175, designed for returning the collected dielectric liquid 120, is located at the apex of the lower collection sump 177. A degassing outlet 174 is provided on a side wall of the collection sump 177. Disposed within the housing 171, in the upper conical section, is an array of rods 176. These rods are solid capillary rods made, for example, of stainless steel with a radius of approximately 0.2 mm to 0.5 mm, and are arranged radially to converge toward the apex of the upper cone. This arrangement creates a gradually increasing density of the rods from top to bottom. The surface of the rods 176 is prepared with a controlled roughness to promote wettability, thereby optimizing droplet capture and coalescence.

In operation, the gas-liquid mixture enters the housing 171 through the gas-liquid mixture inlet 172 and is dispersed by the inlet distribution nozzles 178. As the mixture flows down through the array of rods 176 in the conical section, liquid droplets impinge on the rods, coalesce, and drain downwards along the converging rods. The separated liquid passes through the initial liquid outlet 173 at the apex of the upper cone and collects in the collection sump 177 below. From the collection sump 177, the recovered dielectric liquid 120 is returned to the sealed enclosure 110 via the liquid return outlet 175. Simultaneously, the lighter, separated gas reverses its direction, flows upwards along the inner walls of the housing, and is discharged to the ambient environment through the degassing outlet 174.

The structure of the gas-liquid separation unit 170 shown in FIG. 5 is designed to operate effectively under various flow regimes. When only gas enters the separator, the high effective porosity of the upper section of the rod array presents minimal resistance, allowing the gas to be guided to the degassing outlet 174 with negligible pressure drop. This ensures a rapid and stable pressure relief response for the sealed enclosure 110. When the incoming flow is a mist of fine droplets entrained in gas, the denser middle and lower sections of the rod bed increase the probability of droplet impingement and coalescence. This effectively removes the mist before the gas reaches the outlet. In the case of a slug or spray flow, where a high volume of liquid enters simultaneously with the gas, the highly dense section near the apex acts as a collection zone, rapidly channeling the liquid into the collection sump 177. The reversal of the gas flow path in the calmer lower region also prevents re-entrainment of the collected liquid, ensuring a drier gas is vented.

In one embodiment, the effective depth of the capillary bed along the cone of the gas-liquid separation unit 170 may be selected in the range of 50 mm to 100 mm to balance separation efficiency with pressure drop. The cone angle is preferably between 40 and 70 degrees to establish a gradual increase in rod density without causing an abrupt rise in hydraulic resistance. The cross-section of the degassing outlet 174 is sized to permit pressure control of the sealed enclosure 110 with minimal delay or back-pressure. This structure is resistant to vibration, displacement and changes in orientation, enables reliable pressure reduction of the sealed enclosure 110, and ensures that collected dielectric liquid 120 is controllably returned to the circuit, thereby preventing its loss.

To provide active control over the gas discharge and liquid return processes, further components may be included in the system. As shown in various exemplary embodiments, such as in FIG. 4A and FIG. 5, the gas outlet 160 may be equipped with an outlet control valve 161 to precisely manage the venting process. Furthermore, the liquid return path from the gas-liquid separation unit 170 may include a liquid return pump 179 and a liquid return valve 180. In a preferred implementation, these components are electronically actuated and governed by the controller unit 210.In the preferred embodiment detailed in FIG. 4A and FIG. 4B, the controller unit 210 of the management subsystem 200 comprises a plurality of specialized control boards. These include at least one Battery Management System (BMS) 211 board, at least one Charge Management system 212 board, and at least one active compression and thermal management system (ACTMS) 213 board. In another embodiment, the controller unit 210 may also comprise a dedicated temperature control board 214 configured to manage the thermal conditioning unit 230 under the coordination of the ACTMS board 213. Each board handles specific aspects of the battery's operation. These boards are in electronic communication with all relevant sensors within the energy subsystem 100 and with other components of the management subsystem 200.

As also illustrated in the embodiment of FIG. 4A and FIG. 4B, the management subsystem 200 may further include at least one ambient temperature sensor 241 and at least one ambient pressure sensor 242. These sensors are configured to continuously monitor the external environmental conditions. The data from sensors 241 and 242 is transmitted to ACTMS 213 to be factored into its control decisions, allowing the system to adapt its operation to the surrounding environment.

The Battery Management System 211 functions as a primary processing unit for monitoring the electrical parameters of the electrochemical cells 130. BMS 211 monitors voltage, current, temperature, and internal resistance for each individual cell or for groups of cells. BMS 211 provides fundamental safety protections, such as circuit interruption in the event of over-voltage, under-voltage, over-current, or out-of-range temperature conditions, and performs cell balancing operations, utilizing either active or passive methods, to minimize voltage discrepancies between cells and thereby maximize the effective capacity of the battery pack. In a preferred embodiment, BMS 211 transmits its data to ACTMS 213 for use in higher-level decision-making processes.

The Charge Management system 212 manages the charging process for the battery pack. charge management system212 selects an appropriate charging profile, such as CC/CV, or more advanced profiles dependent on cell temperature and state-of-health, based on prevailing operating conditions. Board 212 can impose limits on the charging current or the total pack voltage and operates in coordination with BMS 211 to prevent electrochemical stress on the cells. Charge Management system212 also provides an interface for communication with external charging equipment.

ACTMS 213 serves as the overall system coordinator. ACTMS 213 is configured to process input data including data received from BMS 211, Charge Management system212, and various sensors located both internal and external to the sealed enclosure 110. Based on this data analysis, ACTMS 213 issues control commands to the pneumatic units, including pneumatic supply unit 220 and its pump 221, regulator 222 and related valves, as well as to the thermal units, including thermal conditioning unit 230, heat pump 231 and heat exchanger 151, and any associated safety units.

ACTMS 213 is capable of several advanced control functions. It can dynamically regulate the pressure within the sealed enclosure 110, modulate the thermal conductance of the inter-wall space of the double-walled sealed enclosure 110, and implement multi-layered control loops for precise thermal management of the electrochemical cells 130. Furthermore, ACTMS 213 may employ learning and predictive algorithms to estimate future operating conditions and execute preconditioning actions, such as pre-heating or pre-cooling the electrochemical cells 130 in anticipation of a load.

The management subsystem 200 also includes a set of electrical interconnections, comprising connectors, wiring, and interface circuits, which establish communication between the various control boards, sensors, and the components and actuators of the pneumatic supply unit 220 and the thermal conditioning unit 230. In one embodiment, these interconnections are modular and electrically isolated to reduce electromagnetic interference EMI and enhance overall system reliability.

In a preferred embodiment, a control strategy is employed in which the internal resistance of the electrochemical cells 130 is used as a key indicator of state-of-health. It is known that internal resistance naturally increases as a cell 130 ages. It is also known that applying mechanical compression to a cell 130 can counteract this increase in internal resistance and control irreversible degradation that occurs during aging. The present disclosure recognizes a direct correlation between the internal resistance of a cell 130, its degree of degradation, and the optimal compression pressure required.

Based on this correlation, the system establishes a direct control loop between the measured internal resistance and the applied isostatic pressure. By monitoring internal resistance, the system can infer the real-time compression requirement of the electrochemical cells 130. This approach simplifies the multi-parameter problem of cell compression into a control rule based on a single, reliably measurable variable. ACTMS 213 coordinates this process, dynamically adjusting the pressure applied by pneumatic supply unit 220 based on internal resistance data provided directly by cell-monitoring sensor 182 or calculated from measurements supplied by BMS 211.

In a preferred embodiment, the internal resistance of the electrochemical cells 130 is employed as a key indicator of state-of-health, where an end-of-life condition is deemed when the internal resistance, measured under defined conditions, is at or above a threshold selected within 150%-200% of its initial calibrated value. Applying mechanical compression can counteract the increase in internal resistance and control irreversible swelling. As both internal resistance and swelling tend to increase with age, a direct relationship exists between a cell's measured internal resistance and its real-time compression requirement.

Accordingly, the system establishes a direct control loop between the measured internal resistance and the applied isostatic pressure. This control rule is based on a single measurable variable. ACTMS 213 coordinates and controls this process, dynamically adjusting the pressure applied by pneumatic supply unit 220 based on internal resistance data from cell-monitoring sensor 182 or calculations from BMS 211.

In a preferred embodiment of this control strategy, a reference initial value of internal resistance for each electrochemical cell 130 is measured and stored during system calibration. A resistive health index, defined as the ratio of instantaneous internal resistance to this reference initial value, is periodically monitored under controlled operating conditions. Throughout the system life, changes in this resistive health index serve as the primary criterion for determining the required level of isostatic compression. The reference initial values may be dynamically updated with field data to reflect natural aging and operational context.

The data required for this calculation, namely the voltage and current of the electrochemical cells 130, is provided to ACTMS 213 by BMS 211 and cell-monitoring sensor 182. The internal resistance parameter is then calculated from this data, for instance, by applying Ohm's law to the voltage drop observed during a defined current pulse (DCIR method), or by using electrochemical impedance spectroscopy (EIS) techniques. This implementation is synergistic with the existing sensor architecture and adds a new logical data path for the resistive health index without necessitating additional complex hardware.

The regulation of isostatic pressure is applied dynamically throughout the lifespan of the electrochemical cells 130. The applied pressure is varied over time based on the real-time condition of the cells 130 to ensure they continuously experience an optimal level of compression. In a preferred embodiment, the required pressure for the cells 130 is within a range of approximately 0.2 Bar to 5 Bar. Over the cells' lifetime, the system intelligently determines the precise pressure needed at any given moment and adjusts the applied pressure to increase within this range as the cells age.

In one embodiment, the control algorithm governing isostatic pressure is based on a three-state logic. First, if the resistive health index increases, compression is gradually increased to control internal resistance, aiming to return it to a desired operational range or to prevent excessive deviation. The magnitude of pressure increase may follow a predefined compression window curve relative to the cell's cycle life as specified by the manufacturer. Second, when the resistive health index remains within the desired operational range, compression is maintained at a constant value while monitoring continues. Third, as a cell 130 approaches end-of-life, for example when the resistive health index exceeds 150% of the reference initial value, a limiting and safety-assured strategy is activated to ensure stable operation until the cell can be serviced or replaced.

In one implementation, ACTMS 213, upon receiving the resistive health index derived from voltage and current data from BMS 211, issues compression commands directly to pneumatic supply unit 220, specifically to regulator 222, being a digital regulator, and associated controllable elements 225. In this control path, the resistive health index is the single control variable, creating an independent control loop that reduces system oscillations and increases control precision.

From a technical effects perspective, the direct coupling of compression to internal resistance simplifies decision-making and leads to performance improvements including greater accessible capacity, improved uniformity among cells, increased power density, and extended cycle life. This control loop functions as an additional, low-cost control layer operating alongside other independent control loops such as thermal regulation.

In a preferred embodiment, the energy subsystem 100 and the management subsystem 200 may be implemented, respectively, as an energy module and a management module, and all the interconnections between these modules are designed to be modular. In this embodiment, the energy modules and the management modules are designed with similar geometries and dimensions, preferably as rectangular cuboids. This standardized form simplifies the physical arrangement and interconnection of the modules, allowing them to be stacked on top of and placed adjacent to one another like building blocks to form a complete battery pack.

Each battery pack comprises at least one energy module, which is operationally governed by a management module. The energy modules, each providing a specific voltage and current rating, can be electrically connected in series or parallel configurations. This modular electrical interconnection allows for the creation of battery packs with a wide variety of overall voltage and current specifications, tailored to different applications.

In one embodiment of the disclosure, a modular interlocking system is provided for the connection of energy modules and management modules. This system is configured to facilitate rapid, tool-less assembly and disassembly by non-expert users while ensuring a robust mechanical connection that is tolerant of typical assembly misalignments. The mechanical interface comprises a set of male and female alignment features, such as tapered pins and corresponding receptacles, located on the mating faces of the modules. The tapered geometry provides a self-guiding and self-centering function during engagement, compensating for positioning inaccuracies. To further enhance tolerance absorption, the alignment features may be float-mounted on an elastomeric bushing. Upon full engagement, a user-actuated locking mechanism secures the modules, preventing accidental disengagement due to vibration or shock. This interlocking logic is replicated on both the vertical (top/bottom) and horizontal (side) faces of the modules, enabling the creation of both stacked and matrix-like arrays.

The interlocking system may further incorporate an integrated multi-domain connection interface. In such an embodiment, the mechanical alignment features, such as the pins and receptacles, also serve as conduits for establishing electrical, pneumatic, and/or fluidic connections simultaneously upon mechanical engagement. For instance, a single pin-receptacle pair may house a unified cartridge containing both high-power bus bars and low-power signal pins for control and sensor data, thereby eliminating the need for external cabling.

Similarly, another pin-receptacle pair may house a pneumatic interface, such as a self-sealing, dual-channel coupling, providing separate paths for gas supply and return. Each path may include a spring-loaded valve that automatically seals the line when disengaged. A third pin-receptacle pair may house a fluidic interface for a liquid coolant circuit, designed as a non-drip, dual-channel coupling. This ensures that both sides of the coolant line are sealed upon disconnection to prevent leakage. This integrated approach, combining mechanical alignment, secure locking, and simultaneous multi-domain connection in a single user action, drastically simplifies the reconfiguration and servicing of the battery pack.

### Examples

An experiment was conducted to investigate the effects of flexible pneumatic compression on the cycle life and internal resistance behavior of Lithium Iron Phosphate (LFP/Graphite) electrochemical cells. The experimental setup utilized the battery control system 1000 as described herein. It comprised a sealed enclosure 110 containing the electrochemical cells 130, fully immersed in dielectric liquid 120. The pneumatic supply unit 220, governed by the controller unit 210, was used to supply pressurised gas via the gas injection unit 140 to control the isostatic pressure within the enclosure.

Two distinct pressure control approaches according to the present disclosure were investigated. The first approach involved a dynamic pressure profile, wherein the internal pressure was controllably increased over the cells' lifetime according to a predefined schedule. This approach was designed to actively compensate for the gradual swelling of the cells and maintain an effective contact pressure. In the second approach, the internal pressure was maintained at a constant value throughout the test. This approach was used to distinguish the effects specifically due to pressure variability, rather than those resulting from a constant isostatic pressure.

In addition, for comparison, a third group serving as a reference representing prior art was also tested. In this group, the electrochemical cells 130 were constrained along their thickness axis by a fixed-displacement mechanical clamp, consistent with common industrial practice. The clamped assembly was then immersed in the dielectric liquid 120 under the same controlled thermal conditions as the other two groups, ensuring that the boundary compression method was the only variable under investigation.

Each test module consisted of four 3.2 V, 60 Ah prismatic electrochemical cells with an LFP/graphite chemistry, connected in a 4-series (4s) configuration. Prior to the start of cycle testing, the initial capacity (C₀) and initial internal resistance (R₀) of each cell were measured. The cells were then assembled into modules such that the initial variation in capacity and internal resistance among the test groups did not exceed 2-3%. After completing two to three formation cycles, the cells were fully immersed in ampcool AC-110 dielectric liquid 120, with the temperature actively maintained at 25 ± 1 °C. The sealed enclosure 110 was fabricated from steel, and a gauge pressure sensor with a range of 0-0.5 MPa and an accuracy of ±0.25% of full scale was installed in the upper section of the enclosure to continuously monitor the pressure applied by the pneumatic supply unit 220.As described previously, three test groups were defined:

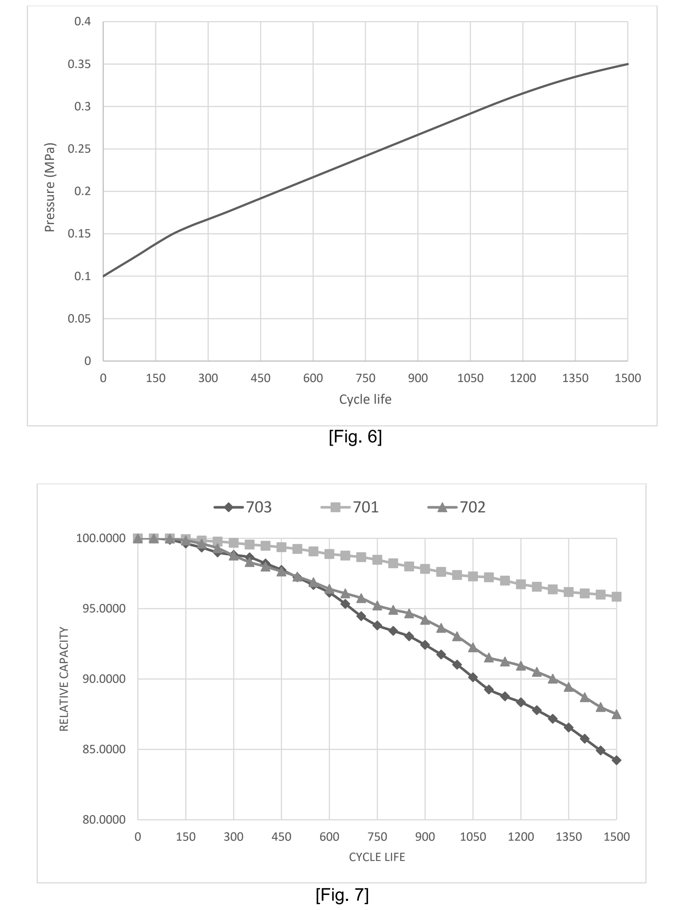

The first group, designated Group A, was subjected to variable isostatic pressure. For this group, the internal pressure of the sealed enclosure 110 was dynamically increased by the pneumatic supply unit 220 according to a cycle-dependent profile over the course of the electrochemical cell 130 lifetime. The pressure was initiated at 0.1 MPa and was gradually raised to approximately 0.20 MPa by cycle 500, and then further increased to reach 0.35 MPa by cycle 1500. The applied pressure range over the lifetime varies depending on the electrochemical cell 130 shape, size, chemistry, and other design parameters. For the tested electrochemical cell 130, this was determined through a series of various tests as the optimum pressure range, as illustrated in the graph shown in FIG. 6 This pressure was applied to and regulated within the sealed enclosure 110 by the pneumatic supply unit 220.

The second group, designated group B, was subjected to constant isostatic pressure. All experimental conditions for group B were identical to those of Group A, with the exception that the internal pressure of the sealed enclosure 110 was maintained at a constant value of 0.1 MPa, throughout the entire duration of the test.

The third group, designated group C, served as a reference representing a conventional compression method. For this group, the electrochemical cells 130 were braced between two 10 mm thick steel end-plates using four M8 bolts, with a pre-load force of 3 kN. This created a fixed-displacement clamp assembly with a stiffness equivalent to 12 MPa/mm, meaning that for every millimeter of electrochemical cells 130 swelling due to aging, the pressure on the cells would increase by 12 MPa.

The cycle testing protocol was identical for all three groups. The cycle profile consisted of a Constant Current-Constant Voltage (CC-CV) charge to 3.65 V at a 1C rate, terminated at a C/20 rate, followed by a 5-minute rest. This was followed by a Constant Current (CC) discharge at a 1C rate down to 2.50 V, and another 5-minute rest. This sequence was repeated for 1500 cycles. The capacity of each test module was measured every 50 cycles and is reported as capacity retention (C/C₀, %). To monitor internal resistance, a DCIR protocol was executed at 50% State of Charge (SoC) after a 30-minute thermal stabilization period. This involved applying a 10-second, 1C pulse and sampling the voltage drop between 40 and 60 millisecond (ms. The average of three repetitions was used for the internal resistance value (R), and the reported as (R/R₀ %). Both the ambient and dielectric liquid 120 temperatures were maintained at 25 ± 1 °C throughout all tests.

The capacity test results as a function of cycle life for all three groups are shown in the graph of Figure 7. As shown, at the beginning of the test, the capacity of all three samples was at an identical reference value. All three sample curves exhibited similar ageing behavior during the first 200 cycles. However, as cycling progressed, the curve of group A 701 displayed a clear and significant deviation from the curves of group B 702 and group C 703. Specifically, at cycle 1500, the curve of group A retained approximately 8.5 % and 11.5 % higher capacity than the curves of group B and group C, respectively.

This behavior indicates that variable compression under the applied pneumatic pressure profile slows the rate of capacity fade compared to constant pre-load conditions. By extrapolating the curves to the point where the relative capacity reaches 80 %, it can be concluded that the cells of group A are expected to last roughly twice as long as those of group C and exhibit at least a 50 % longer lifetime than group B.

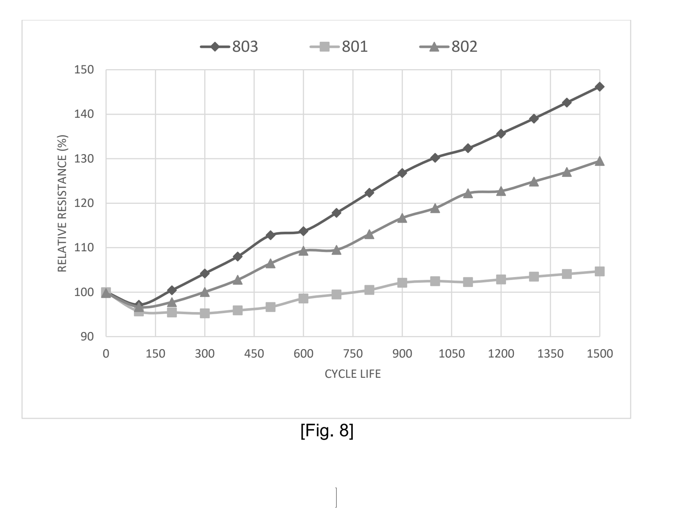

The internal resistance test results as a function of cycle life are shown in the graph of Figure 8. In this test, the internal resistance values were reported as a ratio relative to the initial reference value R₀. At the beginning of the test, the ratio R/R₀ was 100 %. During the first 100 cycles, a slight decrease was observed, reaching approximately 95-96 %, which can be attributed to the initial conditioning and stabilisation of internal contacts. Subsequently, the internal resistance gradually increased with further cycling. At the end of 1500 cycles, the curve of group A 801 shows an increase to approximately 104 %, while the curves of group B 802 and group C 803 reach about 129 % and 146 %, respectively.

A comparison of these trends indicates that under the flexible pneumatic compression applied to group A, the increase in internal resistance was significantly suppressed, remaining close to its reference value throughout the test duration. In contrast, the other two groups exhibited a pronounced cumulative increase in internal resistance over the same period.

In the technical specifications of the tested cells, an increase in internal resistance to 150% of its initial value is considered a criterion for the cell's end of life. By extending the trend of the relative internal-resistance curve with respect to the cycle number, it can be inferred that a strong correlation exists between the end-of-life criterion defined by 150 % internal resistance and that defined by 80 % relative capacity.

This correlation is significant because it enables the definition of a control index derived from the internal-resistance graph. For any given point in the cell's lifetime, the corresponding resistance value can be used to determine the optimal compression pressure required for the cell at that stage. This feature is particularly valuable as it provides an independent indicator for identifying the appropriate compression range for different cells operating under various conditions. Therefore, the internal resistance may be defined as a resistive health index, allowing the system to apply the appropriate pressure to the module at any given cycle life.

In summary, the combination of immersion cooling within the sealed enclosure 110 and the application of a flexible pneumatic compression profile resulted in improved capacity retention and suppressed internal resistance growth over 1500 cycles, compared to the fixed clamping method. The gradual, cycle-dependent pressure profile demonstrates that this method avoids abrupt changes and allows the mechanical compression to be synchronised with the cell's natural ageing process. From a technical standpoint, these results are consistent with mechanisms involving swelling suppression, preservation of internal contact integrity, and improved thermal homogeneity.

This example is provided for illustrative purposes only and does not limit the scope of the disclosure. Operational parameters, pressure profiles, and measurement techniques can be varied depending on the specific application, provided that a person skilled in the art can reproduce the test and evaluate the technical effect based on this description.

### Industrial Applicability

The battery control system, modules, and methods described in the present disclosure have significant industrial applicability in the design, manufacture, and operation of advanced energy storage solutions. The invention is particularly well-suited for demanding applications such as electric vehicles (EVs), including passenger cars, commercial trucks, and buses, where extended cycle life, enhanced safety, and fast-charging capabilities are critical. Furthermore, its inherent modularity, high reliability, and superior thermal management make it ideal for grid-scale energy storage systems for stabilising power from renewable sources, as well as for aerospace applications, marine propulsion, and heavy industrial machinery where robust, long-lasting, and scalable battery packs are required.

## Claims

1. A battery control system (1000), comprising:
**A.** at least one energy subsystem (100) comprising:
i. a sealed enclosure (110);
ii. a dielectric liquid (120) contained within the sealed enclosure (110); and
iii. at least one electrochemical cell (130) positioned within the dielectric liquid (120);
**B.** at least one management subsystem (200) comprising:
i. at least one controller unit (210); and
ii. at least one pneumatic supply unit (220) operatively coupled to the controller unit (210);
**characterised in that**:
**C.** the energy subsystem (100) comprising at least one gas injection unit (140) connected to the pneumatic supply unit (220) and in fluid communication with the sealed enclosure (110) for regulating the internal pressure therein.

2. The battery control system (1000) according to claim 1, wherein the sealed enclosure (110) has a gaseous headspace (115) and a gas outlet (160) located in the headspace; and wherein the system further comprises an outlet control valve (161) connected to the gas outlet (160), wherein the outlet control valve (161) is controllable by the controller unit (210) to regulate release of gas from the sealed enclosure (110).

3. The battery control system (1000) according to any one of the preceding claims, wherein the sealed enclosure (110) is a double-walled enclosure comprising:
i. an inner wall (111) defining a first space (113) configured to contain the dielectric liquid (120) and the at least one electrochemical cell (130); and
ii. an outer wall (112) surrounding the inner wall (111) and defining a second space (114) between the inner wall (111) and the outer wall (112).

4. The battery control system (1000) according to claim 3, further comprising:
i. a first valve (116) coupling the first space (113) to the second space (114); and
ii. a second valve (117) coupling the second space (114) to an ambient environment.

5. The battery control system (1000) according to claim 2, further comprising a gas-liquid separation unit (170) fluidically coupled to the gas outlet (160).

6. The battery control system (1000) according to claim 5, wherein the gas-liquid separation unit (170) comprises:
i. a housing (171) comprising an upper cylindrical section and a lower section shaped as an inverted cone;
ii. a gas-liquid mixture inlet (172) disposed in the upper cylindrical section;
iii. an initial liquid outlet (173) located at the apex of the inverted cone;
iv. a liquid collection sump (177) positioned below the inverted cone to receive liquid therefrom;
v. a liquid return outlet (175) disposed in the collection sump (177) and fluidically coupled to the sealed enclosure (110);
vi. a degassing outlet (174) disposed in the collection sump (177); and
vii. an array of solid capillary rods (176) disposed within the inverted cone of the housing (171), wherein the rods are arranged radially and converge downwards.

7. The battery control system (1000) according to any one of the preceding claims, wherein the controller unit (210) comprises at least one of a Battery Management System (BMS) board (211); a Charge Management board (212); and an Active Compression and Thermal Management System (ACTMS) board (213).

8. The battery control system (1000) according to claim 4, further comprising a gas inlet port (118) disposed in the second space (114) and fluidically coupled to the pneumatic supply unit (220).

9. The battery control system (1000) according to claim 8, wherein the pneumatic supply unit (220) comprises:
i. at least one pneumatic pump (221);
ii. at least one regulator (222) fluidically coupled to the pneumatic pump (221);
iii. a distribution manifold (226) fluidically coupled to an output of the regulator (222), the manifold (226) comprising:
a first outlet path coupled to the at least one gas injection unit (140); and
a second outlet path coupled to a gas inlet port (118) of the second space (114); and
iv. at least one controllable element (225) disposed in each of the first and second outlet paths.

10. The battery control system (1000) according to any one of the preceding claims, further comprising a thermal conditioning unit (230); and a thermal transfer unit (150) disposed within the sealed enclosure (110), wherein the thermal conditioning unit (230) is operatively coupled to the thermal transfer unit (150) to regulate the temperature of the dielectric liquid (120).

11. The battery control system (1000) according to claim 10, wherein the thermal transfer unit (150) is implemented as a heat exchanger (151), and the thermal conditioning unit (230) is implemented as a reversible heat pump (231).

12. The battery control system (1000) according to any one of the preceding claims, wherein the at least one gas injection unit (140) is arranged to be in direct fluidic communication with the dielectric liquid (120); wherein the controller unit (210) is configured to operate the pneumatic supply unit (220) to perform, via gas injection from said gas injection unit (140), the simultaneous functions of regulating isostatic pressure and inducing forced circulation within the dielectric liquid (120).

13. The battery control system (1000) according to any one of the preceding claims, wherein the energy subsystem (100) further comprises at least one of a pressure sensor (181); a temperature sensor (183); and a cell monitoring sensor (182) operatively coupled to the at least one electrochemical cell (130), wherein said at least one sensor is disposed within the sealed enclosure (110) and is in electronic communication with the controller unit (210).

14. The battery control system (1000) according to claim 13, wherein the system comprises a cell monitoring sensor (182) configured to provide data indicative of an internal resistance of the at least one electrochemical cell (130) to the controller unit (210).

15. The battery control system (1000) according to claim 14, wherein the controller unit (210) is further configured to control the pneumatic supply unit (220) to regulate the internal pressure within the sealed enclosure (110) as a function of the internal resistance indicated by the data provided by the cell monitoring sensor (182).
